# EUROPEAN PATENT SPECIFICATION

(11) **EP 4 306 025 B1**
(45) Date of publication and mention of the grant of the patent: **29.10.2025**
(21) Application number: 22875159.0
(22) Date of filing: 30.09.2022
(51) Int. Cl.: A47L 11/24, A47L 11/40

(54) **DEVICE CONTROL METHOD AND APPARATUS, ELECTRONIC DEVICE, CLEANING DEVICE, STORAGE MEDIUM, AND PROGRAM**
VERFAHREN UND VORRICHTUNG ZUR GERÄTESTEUERUNG, ELEKTRONISCHE VORRICHTUNG, REINIGUNGSVORRICHTUNG, SPEICHERMEDIUM UND PROGRAMM
PROCÉDÉ ET APPAREIL DE COMMANDE DE DISPOSITIF, DISPOSITIF ÉLECTRONIQUE, DISPOSITIF DE NETTOYAGE, SUPPORT DE STOCKAGE, ET PROGRAMME

(30) Priority: 30.09.2021 CN 202111162346
(43) Date of publication of application: 17.01.2024
(73) Proprietor: Jiangsu Midea Cleaning Appliances Co., Ltd., Suzhou Jiangsu 215100 (CN); Midea Group Co., Ltd., Foshan, Guangdong 528311 (CN)
(72) Inventor: ZHOU, Qingdong, Suzhou, Jiangsu 215100 (CN); CAO, Xuetao, Suzhou, Jiangsu 215100 (CN); ZHANG, Jun, Suzhou, Jiangsu 215100 (CN); WAN, Houwei, Suzhou, Jiangsu 215100 (CN); ZHANG, Guanghui, Suzhou, Jiangsu 215100 (CN); ZHAO, Desha, Suzhou, Jiangsu 215100 (CN); LI, Yang, Suzhou, Jiangsu 215100 (CN)
(74) Representative: RGTH
(86) International application number: PCT/CN2022/123199
(87) International publication number: WO 2023/051778

(56) References cited:
- CN-A- 111 150 340
- CN-A- 111 150 340
- CN-A- 113 925 392
- CN-A- 113 925 392
- CN-U- 211 243 185
- CN-U- 212 326 300
- DE-U1- 202020 002 224
- US-A1- 2019 365 177

## Description

### TECHNICAL FIELD

Embodiments of the application relate to the technical field of smart homes, and relate to, but are not limited to a device control method and apparatus, an electronic device, a cleaning device, a computer storage medium, and a program.

### BACKGROUND

Movable devices controlled by handles are widely used in daily life, such as a power-assisted cart, a cleaning device provided with a power assistance apparatus. A user may apply push or pull force to the movable device by holding the handle, to control a travelling direction of the movable device; the power assistance apparatus uses a motor to drive rollers of the movable device to rotate, to assist the user with power when the user holds the handle.

Prior art devices are known from CN 111 150 340 A, CN 113 925 392 A and US 2019/365177 A1

In the related art, a mechanical structure design is added below the cleaning device, so that a floor brush is separated from the ground during a pull-back process of the cleaning device, to reduce a friction force of the ground against the cleaning device, and reduce resistance of the user during the pull-back process of the cleaning device. However, in case of a heavy cleaning device, there is still a large usage resistance, so that a cleaning effect of the cleaning device is significantly reduced during the pull-back process.

In the related art, a Hall device is added to the handle of the cleaning device, and a Hall sensor is used to detect the user's gripping signal on the handle, and when the gripping signal is detected, the power assistance apparatus is triggered to operate, so as to assist the user with power. This method cannot accurately distinguish whether the cleaning device is in a forward deceleration process or a backward pull-back process, and power assistance to the cleaning device will fail in case of misjudgment.

Furthermore, magnitude of strength of the user's push or pull force on the handle cannot be identified. When the user is assisted with power, fixed strength compensation parameters are used to drive the motor of the power assistance apparatus to assist the rollers with power in a fixed direction and at a fixed speed, which is difficult to match usage habits of different users. In this case, when resistance of the ground on which the cleaning device is located suddenly increases when the cleaning device goes forward, the user easily feels a sense of abrupt strength.

### SUMMARY

Embodiments of the application provide a device control method and apparatus, an electronic device, a cleaning device, a computer storage medium, and a computer program, which may improve control accuracy of assisting the cleaning device with power.

An embodiment of the application provides a device control method, applied to a cleaning device. The cleaning device comprises a cleaning device body and a floor brush. The cleaning device body is provided with a handle, and the floor brush is provided with a floor brush motor and a roller. The method comprises the following operations.

Information of a push or pull force applied to the handle by a user at a current moment is acquired, and a movement state of the cleaning device at the current moment is determined according to the information of the push or pull force.

Torque compensation information of the floor brush motor at the current moment is determined according to the movement state of the cleaning device at the current moment and the information of the push or pull force.

An operation state of the cleaning device is controlled according to the torque compensation information.

In an implementation, the operation of determining the movement state of the cleaning device at the current moment according to the information of the push or pull force may comprise the following operations.

Information of a resultant force along a speed direction of the cleaning device is determined according to the information of the push or pull force and information of a rolling friction force of the cleaning device.

Speed information of the cleaning device at the current moment is acquired.

The movement state of the cleaning device at the current moment is determined according to the information of the resultant force and the speed information.

In an implementation, the operation of acquiring the speed information of the cleaning device at the current moment may comprise the following operations.

An intensity variation curve of the push or pull force applied to the handle by the user after the cleaning device is started, is acquired.

The speed information of the cleaning device at the current moment is acquired according to the intensity variation curve of the push or pull force and the information of the rolling friction force of the cleaning device.

In an implementation, the handle may be provided with a pressure sensor, and the operation of acquiring the information of the push or pull force applied to the handle by the user at the current moment may comprise the following operations.

The information of the push or pull force applied to the handle by the user at the current moment is acquired according to deformation information generated on the handle and detected by the pressure sensor.

In an implementation, the pressure sensor may comprise a first sensing unit and a second sensing unit.

The operation of acquiring the information of the push or pull force applied to the handle by the user at the current moment according to the deformation information generated on the handle and detected by the pressure sensor may comprise the following operations.

Deformation information of a first area on the handle is detected by the first sensing unit, and a first vector information of the push or pull force applied to the handle by the user is acquired according to the deformation information of the first area.

Deformation information of a second area on the handle is detected by the second sensing unit, and a second vector information of the push or pull force applied to the handle by the user is acquired according to the deformation information of the second area.

The information of the push or pull force applied to the handle by the user at the current moment is acquired according to the first vector information and the second vector information.

In an implementation, the operation of controlling the operation state of the cleaning device according to the torque compensation information may comprise the following operations.

Rotation speed and direction of the floor brush motor are determined according to the torque compensation information.

The operation state of the cleaning device is controlled according to the rotation speed and direction of the floor brush motor.

An embodiment of the application provides a device control apparatus, applied to a cleaning device. The cleaning device comprises a cleaning device body and a floor brush. The cleaning device body is provided with a handle, and the floor brush is provided with a floor brush motor and a roller. The apparatus comprises an acquisition part, a processing part and a control part.

The acquisition part is configured to acquire information of a push or pull force applied to the handle by a user at a current moment, and determine a movement state of the cleaning device at the current moment according to the information of the push or pull force.

The processing part is configured to determine torque compensation information of the floor brush motor at the current moment according to the movement state of the cleaning device at the current moment and the information of the push or pull force.

The control part is configured to control an operation state of the cleaning device according to the torque compensation information.

In an implementation, the processing part configured to determine the movement state of the cleaning device at the current moment according to the information of the push or pull force may comprise that the processing part is configured to:
determine information of a resultant force along a speed direction of the cleaning device according to the information of the push or pull force and information of a rolling friction force of the cleaning device;
acquire speed information of the cleaning device at the current moment; and
determine the movement state of the cleaning device at the current moment according to the information of the resultant force and the speed information.

In an implementation, the processing part configured to acquire the speed information of the cleaning device at the current moment may comprise that the processing part is configured to:
acquire an intensity variation curve of the push or pull force applied to the handle by the user after the cleaning device is started; and
acquire the speed information of the cleaning device at the current moment according to the intensity variation curve of the push or pull force and the information of the rolling friction force of the cleaning device.

In an implementation, the handle may be provided with a pressure sensor, and the acquisition part configured to acquire the information of the push or pull force applied to the handle by the user at the current moment may comprise that the acquisition part is configured to:
acquire the information of the push or pull force applied to the handle by the user at the current moment according to deformation information generated on the handle and detected by the pressure sensor.

In an implementation, the pressure sensor may comprise a first sensing unit and a second sensing unit.

The acquisition part configured to acquire the information of the push or pull force applied to the handle by the user at the current moment according to the deformation information generated on the handle and detected by the pressure sensor may comprise that the acquisition part is configured to:
detect deformation information of a first area on the handle by the first sensing unit, and acquire a first vector information of the push or pull force applied to the handle by the user according to the deformation information of the first area;
detect deformation information of a second area on the handle by the second sensing unit, and acquire a second vector information of the push or pull force applied to the handle by the user according to the deformation information of the second area; and
acquire the information of the push or pull force applied to the handle by the user at the current moment according to the first vector information and the second vector information.

In an implementation, the control part configured to control the operation state of the cleaning device according to the torque compensation information may comprise that the control part is configured to:
determine rotation speed and direction of the floor brush motor according to the torque compensation information; and
control the operation state of the cleaning device according to the rotation speed and direction of the floor brush motor.

An embodiment of the application provides an electronic device, the electronic device comprises a memory, a processor, and a computer program stored on the memory and executable on the processor. The processor implements any one of the above device control methods when the processor executes the program.

An embodiment of the application provides a cleaning device, the cleaning device comprises any one of the above device control apparatuses or any one of the above electronic devices.

An embodiment of the application provides a computer storage medium, the computer storage medium has stored thereon a computer program, the computer program is capable of implementing any one of the above device control methods after the computer program is executed.

An embodiment of the application provides a computer program, comprising computer-readable codes. A processor in an electronic device operates to implement any one of the above device control methods when the computer-readable codes are executed in the electronic device.

Based on the device control method provided in the embodiments of the application, information of the push or pull force applied to the handle by the user at the current moment is acquired, and the movement state of the cleaning device at the current moment is determined according to the information of the push or pull force; movement states of the cleaning device are distinguished, and torque compensation information of the floor brush motor at the current moment is determined according to the movement state of the cleaning device at the current moment and the information of the push or pull force. Therefore, the torque compensation information may be matched with the movement state of the cleaning device at the current moment and the information of the push or pull force, and control accuracy of assisting the cleaning device with power may be improved when the operation state of the cleaning device is controlled according to the torque compensation information.

It should be understood that the foregoing general descriptions and the following detailed descriptions are exemplary and explanatory only, and do not limit the application.

### BRIEF DESCRIPTION OF THE DRAWINGS

Here, the drawings are incorporated into the description and constitute a part of the description. These drawings show embodiments consistent with the application, and are used together with the description to describe technical solutions of the application.
FIG. 1 is a schematic diagram of a product structure of a cleaning device according to an embodiment of the application.
FIG. 2 is a schematic flowchart of a device control method according to an embodiment of the application.
FIG. 3 is a schematic flowchart of determining a movement state of a cleaning device at a current moment according to an embodiment of the application.
FIG. 4 is a schematic diagram of force analysis of a cleaning device according to an embodiment of the application.
FIG. 5 is a schematic diagram of an intensity variation curve of a push or pull force and a speed variation curve according to an embodiment of the application.
FIG. 6 is a schematic flowchart of acquiring speed information of a cleaning device at a current moment according to an embodiment of the application.
FIG. 7 is a schematic flowchart of acquiring information of a push or pull force applied to a handle at a current moment according to an embodiment of the application.
FIG. 8 is a schematic structural diagram of detecting information of a push or pull force by multiple sensors according to an embodiment of the application.
FIG. 9 is a schematic diagram of an device control apparatus according to an embodiment of the application.
FIG. 10 is a schematic structural diagram of an electronic device according to an embodiment of the application.

### DETAILED DESCRIPTION

In the related art, when the cleaning device is assisted with power, fixed strength compensation parameters are used to control the motor of the power assistance apparatus to operate, which cannot accurately assist the user with power, and control accuracy of assisting the cleaning device with power is low. Therefore, how to improve control accuracy of assisting the cleaning device with power, has become an important problem to be solved urgently. Based on the above, technical solutions of the application are proposed.

The application will be described in further detail below with reference to the drawings and embodiments. It should be understood that the embodiments provided here are only intended to explain the application, and are not intended to limit the application. Furthermore, the embodiments provided below are part of embodiments for implementing the application, rather than providing all the embodiments for implementing the application. The technical solutions described in the embodiments of the application may be implemented in any combination manner without conflict. An executive body of a device control method provided in the embodiments of the application may be a movable device controlled by a handle, and the movable device controlled by the handle comprises, but is not limited to a power-assisted cart, a cleaning device provided with a power assistance apparatus.

In an actual application, the movable device may comprise a push or pull force sensor, a power drive circuit, a motor, and a roller. The push or pull force sensor detects magnitude and direction of a push or pull force applied to the handle by the user, to obtain a sensor strength signal; the power drive circuit performs signal amplification on the sensor strength signal, and outputs a control signal to control rotational torque of the motor, so as to drive rotation speed and direction of the roller.

Hereinafter, the device control method provided in the embodiments of the application will be described in detail by taking a cleaning device provided with a power assistance apparatus as an example.

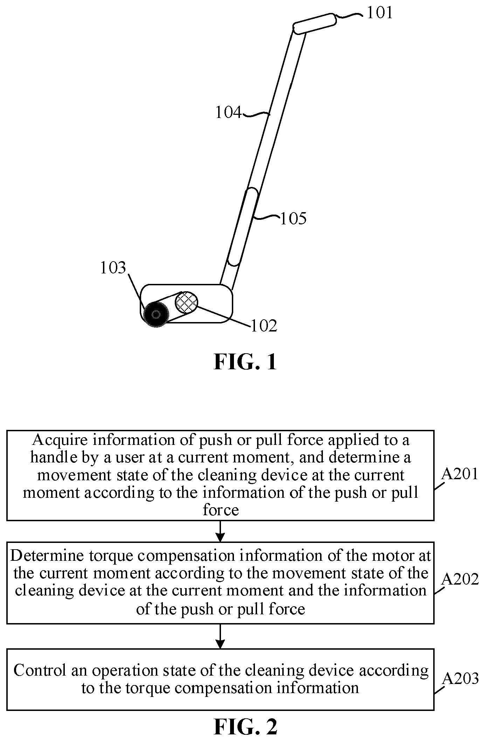

FIG. 1 shows a schematic diagram of a product structure of a cleaning device according to an embodiment of the application. With reference to FIG. 1, the cleaning device comprises a cleaning device body and a floor brush. The cleaning device body is provided with a handle 101 thereon, and the floor brush is provided with a floor brush motor 102 and a roller 103 thereon. The handle 105 is held by a user, and the handle 105 is provided with a pressure sensor thereon, and the pressure sensor detects information of a push or pull force applied to the handle by the user.

In an example, a transmission mechanism is provided in transmission structures of the floor brush motor. Here, the transmission mechanism may comprise a clutch.

FIG. 2 shows a schematic flowchart of a device control method according to an embodiment of the application. With reference to FIG. 2, the device control method provided in the embodiment of the application may comprise the following operations A201 to A203.

At operation A201, information of a push or pull force applied to a handle by a user at a current moment is acquired, and a movement state of the cleaning device at the current moment is determined according to the information of the push or pull force.

Here, the information of the push or pull force may comprise vector information of the push force or vector information of the pull force. The vector information comprises magnitude and direction of an acting force.

In an example, the cleaning device comprises a cleaning device body and a floor brush. The cleaning device body is provided with a handle thereon, and the floor brush is provided with a floor brush motor and a roller thereon. Device types of the cleaning device may comprise any one of the following devices: a vacuum cleaner and a sweeper.

In an example, the information of the push or pull force applied to the handle by the user at the current moment is acquired by a pressure sensor.

It should be understood that while the user uses the movable device controlled by the handle, the information of the push or pull force applied to the handle by the user at the current moment is acquired, which may identify the user's control intention on the movable device.

In an example, the movement state of the cleaning device at the current moment may comprise any one of a forward acceleration state, a forward deceleration state, a forward stop state, a backward acceleration state, a backward deceleration state, and a backward stop state.

It should be understood that determining the movement state of the cleaning device at the current moment and distinguishing different movement states of the cleaning device may effectively identify whether the cleaning device is in a forward deceleration state or in a backward pull-back state.

Hereinafter, a movement speed of the cleaning device is denoted as V, a sensor strength signal is denoted as F, maximum values of the push force and the pull force applied to the handle by the user are denoted as F₁ₘ and F₂ₘ respectively, maximum values of forward speed and backward speed of the cleaning device are denoted as V₁ₘ and V₂ₘ respectively, and maximum static friction forces when the cleaning device moves forward and backward are denoted as F_{1f} and F_{2f} respectively.

The sensor strength signal F indicates magnitude and direction of an acting force applied to the handle by the user.

When the direction of the acting force is the same as a movement direction of the cleaning device, value of F is greater than 0; when the direction of the acting force is opposite to the movement direction of the cleaning device, value of F is less than 0.

At operation A202, torque compensation information of the floor brush motor at the current moment is determined according to the movement state of the cleaning device at the current moment and the information of the push or pull force.

In an example, the information of the push or pull force applied to the handle by the user at the current moment is preprocessed to obtain the sensor strength signal F. Here, preprocessing process comprises any one of analog-to-digital conversion, signal amplification, and normalization.

Hereinafter, a case where the speed direction of the cleaning device at the current moment is consistent with a force acting direction of a dragging force, and a case where the speed direction of the cleaning device at the current moment is opposite to the force acting direction of the dragging force, are described respectively.

Case A1: the speed direction of the cleaning device at the current moment is consistent with the force acting direction of the dragging force.

In an example, when the movement state of the cleaning device at the current moment satisfies a first preset condition, the torque compensation information of the floor brush motor at the current moment is determined according to the sensor strength signal F, and a direction of power provided by the torque compensation information to the cleaning device is controlled to be consistent with a force acting direction of the sensor strength signal F.

Here, the first preset condition may comprise: the speed direction of the cleaning device at the current moment is consistent with the force acting direction of the dragging force, and speed of the cleaning device is less than or equal to a preset threshold.

Here, the preset threshold may be maximum values of forward speed and backward speed of the cleaning device.

For example, when the sensor strength signal F>F_{1f}, an effective acting force along the speed direction of the cleaning device is greater than 0, and the movement speed of the cleaning device V>0, then the speed direction of the cleaning device at the current moment is consistent with the force acting direction of the dragging force, and the torque compensation information of the floor brush motor at the current moment is determined according to the sensor strength signal F.

It should be understood that when the speed direction of the cleaning device at the current moment is consistent with the force acting direction of the dragging force, it means that the push or pull force applied by the user functions to control the cleaning device to continue moving along the speed direction at the current moment.

In this case, the sensor strength signal F is determined as the torque compensation information of the floor brush motor at the current moment, power may be provided to the cleaning device along the speed direction at the current moment, thereby achieving a function of assisting the user with power.

Case A2: the speed direction of the cleaning device at the current moment is opposite to the force acting direction of the dragging force.

In an example, when the movement state of the cleaning device at the current moment satisfies a second preset condition, the torque compensation information of the floor brush motor at the current moment is determined as 0.

Here, the second preset condition may comprise: the speed direction of the cleaning device at the current moment is opposite to the force acting direction of the dragging force, and speed of the cleaning device is less than or equal to a preset threshold; or, the speed of the cleaning device is greater than the preset threshold.

It should be understood that when the speed of the cleaning device is greater than the preset threshold, it is unnecessary to provide power to the cleaning device. In this case, the torque compensation information of the floor brush motor at the current moment is 0, which may improve stability of an operation state of the cleaning device, and may reduce power consumption of the cleaning device.

In an example, the speed of the cleaning device is less than or equal to the preset threshold, the movement state of the cleaning device at the current moment is in a forward deceleration process, the speed direction of the cleaning device at the current moment is opposite to the force acting direction of the dragging force, and the torque compensation information of the floor brush motor at the current moment is determined as 0.

It should be understood that when the speed direction of the cleaning device at the current moment is opposite to the force acting direction of the dragging force, it means that the push or pull force applied by the user functions to control the cleaning device to gradually decelerate along the speed direction at the current moment.

In this case, the torque compensation information of the floor brush motor at the current moment is determined as 0, and the cleaning device may gradually decelerate under action of a rolling friction force, thereby reducing power consumption of the cleaning device.

At operation A203, an operation state of the cleaning device is controlled according to the torque compensation information.

In an example, the operation state of the cleaning device is controlled according to the torque compensation information, to compensate strength of the user's push or pull force. When the cleaning device encounters a large resistance, intelligent power assistance of the cleaning device may be achieved.

In an example, the torque compensation information is acquired, magnitude and direction of the torque output by the motor is controlled according to the torque compensation information, to compensate strength of the user's push or pull force so as to achieve a control effect of a minimum strength used by the user.

It should be understood that based on strength compensation of the user's push or pull force, it is unnecessary for the cleaning device to leave the ground in a forward or backward process when the cleaning device encounters a large resistance, to ensure a cleaning effect of the cleaning device.

Based on the device control method provided in the embodiments of the application, information of the push or pull force applied to the handle by the user at the current moment is acquired, and the movement state of the cleaning device at the current moment is determined according to the information of the push or pull force; movement states of the cleaning device are distinguished, and torque compensation information of the floor brush motor at the current moment is determined according to the movement state of the cleaning device at the current moment and the information of the push or pull force. Therefore, the torque compensation information may be matched with the movement state of the cleaning device at the current moment and the information of the push or pull force, and control accuracy of assisting the cleaning device with power may be improved when the operation state of the cleaning device is controlled according to the torque compensation information.

In an actual application, the above operations A201 to step A203 may be implemented by a processor, and the processor may be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a controller, a microcontroller or a microprocessor.

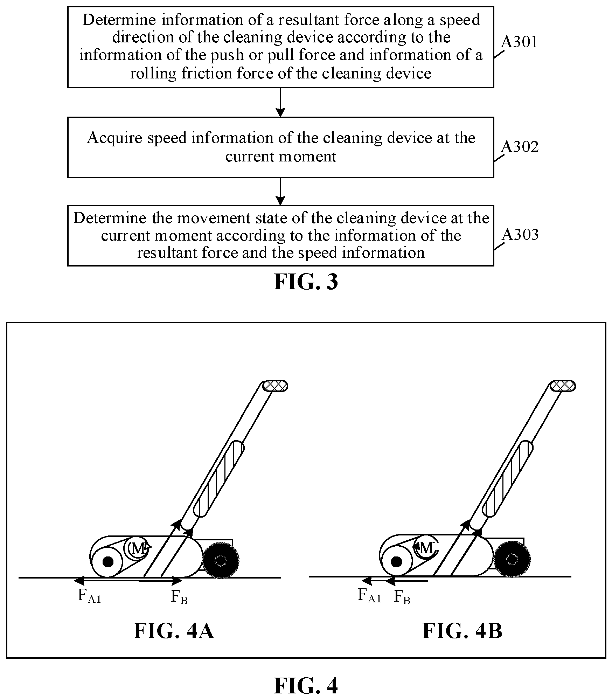

In an implementation, with reference to FIG. 3, the operation of determining the movement state of the cleaning device at the current moment according to the information of the push or pull force in the above operation A201 may comprise the following operations A301 to A303.

At operation A301, information of a resultant force along a speed direction of the cleaning device is determined according to the information of the push or pull force and information of a rolling friction force of the cleaning device.

Here, the information of the resultant force along the speed direction of the cleaning device may be an effective acting force along the speed direction of the cleaning device.

Hereinafter, the user's forward push force on the cleaning device is denoted as FA1, the rolling friction force applied to the cleaning device from the ground is denoted as FB, and the effective acting force along the speed direction of the cleaning device is denoted as Ff.

In an example, with reference to FIG. 4, it shows a schematic diagram of force analysis of the cleaning device. In FIG. 4A, direction of the push or pull force F_{A1} is opposite to direction of the rolling friction force F_{B}, and the effective acting force along the speed direction of the cleaning device is F_{f}= F_{A1} - F_{B}. Similarly, in FIG. 4B, direction of the push or pull force F_{A1} is consistent with direction of the rolling friction force F_{B}, and the effective acting force along the speed direction of the cleaning device is F_{f}= F_{A1} + F_{B}.

At operation A302, speed information of the cleaning device at the current moment is acquired.

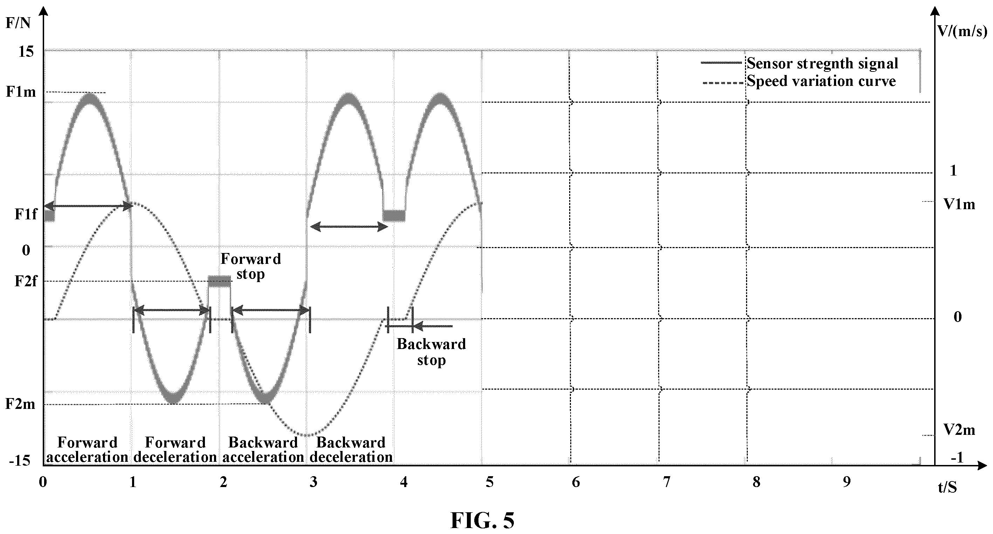

In an example, an acceleration variation curve of the cleaning device is determined according to the effective acting force along the speed direction of the cleaning device. With reference to FIG. 5, a speed variation curve of the cleaning device is estimated according to the acceleration variation curve of the cleaning device.

At operation A303, the movement state of the cleaning device at the current moment is determined according to the information of the resultant force and the speed information.

In an example, the sensor strength signal F comes from F_{A1}, and the sensor strength signal F = |F_{A1}| > |F_{1f}| indicates that the cleaning device is in the movement state. At this time, when the effective acting force F_{f} along the speed direction of the cleaning device is greater than 0, and the movement speed of the cleaning device V>0, then it may be determined that the cleaning device is in a forward acceleration state.

Similarly, the sensor strength signal F comes from F_{A1}, and the sensor strength signal F = |F_{A1}| > |F_{1f}| indicates that the cleaning device is in the movement state. At this time, when the effective acting force F_{f} along the speed direction of the cleaning device is greater than 0, and the movement speed of the cleaning device V<0, then it may be determined that the cleaning device is in a backward deceleration state.

In an example, the sensor strength signal F comes from F_{A2}, and the sensor strength signal F = |F_{A2}| > |F_{2f}| indicates that the cleaning device is in the movement state. At this time, when the effective acting force F_{f} along the speed direction of the cleaning device is less than 0, and the movement speed of the cleaning device V>0, then it may be determined that the cleaning device is in a forward deceleration state.

Similarly, the sensor strength signal F comes from F_{A2}, and the sensor strength signal F = |F_{A2}| > |F_{2f}| indicates that the cleaning device is in the movement state. At this time, when the effective acting force F_{f} along the speed direction of the cleaning device is greater than 0, and the movement speed of the cleaning device V<0, then it may be determined that the cleaning device is in a backward acceleration state.

In an example, when the sensor strength signal F = |F_{A2}| < |F_{2f}| and the movement speed of the cleaning device V=0, then it is determined that the cleaning device is in a forward stop state. Similarly, when the sensor strength signal F = |F_{A1}| < |F_{1f}| and the movement speed of the cleaning device V=0, then it is determined that the cleaning device is in a backward stop state.

In the embodiment of the application, the information of the resultant force along the speed direction of the cleaning device is determined according to the information of the push or pull force and information of the rolling friction force of the cleaning device; speed information of the cleaning device at the current moment is acquired; according to the information of the resultant force and the speed information, the movement state of the cleaning device at the current moment may be accurately identified, and movement states of the cleaning device at the current moment are distinguished, to improve control accuracy of assisting the cleaning device with power.

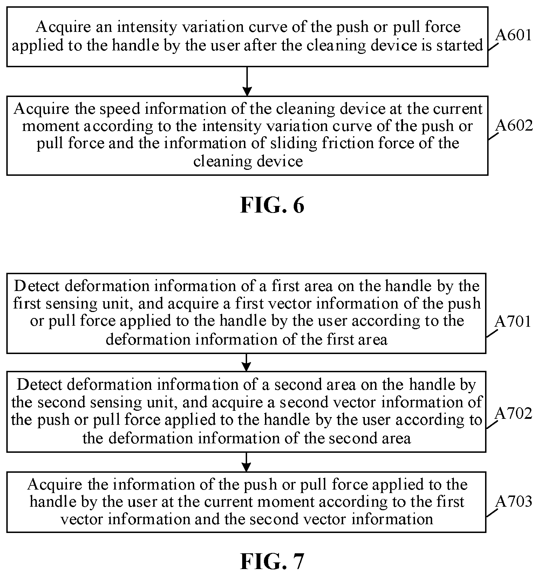

In an implementation, with reference to FIG. 6, the operation of acquiring the speed information of the cleaning device at the current moment in the above operation A302 may comprise the following operations A601 to A602.

At operation A601, an intensity variation curve of the push or pull force applied to the handle by the user after the cleaning device is started, is acquired.

In an example, after the cleaning device is started, the information of the push or pull force applied to the handle by the user is acquired in real time, and the intensity variation curve of the push or pull force applied to the handle by the user is drawn.

At operation A602, the speed information of the cleaning device at the current moment is acquired according to the intensity variation curve of the push or pull force and the information of the rolling friction force of the cleaning device.

In an example, the acceleration variation curve of the cleaning device is determined according to the intensity variation curve of the push or pull force applied to the handle by the user and the information of the rolling friction force of the cleaning device. The speed information of the cleaning device at the current moment is estimated according to the acceleration variation curve of the cleaning device.

In an example, according to the speed variation curve of the cleaning device, a speed variation trend of the cleaning device is identified, the movement state of the cleaning device is determined, and different movement states of the cleaning device are distinguished, to effectively identify whether the cleaning device is in a forward deceleration state or in a backward pull-back state.

In the embodiment of the application, the intensity variation curve of the push or pull force applied to the handle by the user after the cleaning device is started, is acquired; the speed information of the cleaning device at the current moment is acquired according to the intensity variation curve of the push or pull force and the information of the rolling friction force of the cleaning device. For this reason, it is unnecessary to add a speed sensor separately to detect speed of the cleaning device, which improves intelligence of assisting the cleaning device with power. Furthermore, cost of hardware for assisting the cleaning device with power is reduced.

In an implementation, the handle is provided with a pressure sensor thereon, and the operation of acquiring the information of the push or pull force applied to the handle by the user at the current moment in the above operation A201 may comprise the following operations.

The information of the push or pull force applied to the handle by the user at the current moment is acquired according to deformation information generated on the handle and detected by the pressure sensor.

In an example, the deformation information generated on the handle is detected by the pressure sensor, and the information of the push or pull force applied to the handle by the user at the current moment is determined according to the deformation information generated on the handle. Here, the deformation information may comprise deformation dimension information of tensile deformation and deformation dimension information of compression deformation.

It should be understood that the pressure sensor is a device converting pressure into electrical signals for the purpose of control and remote transmission, and may convert pressure parameters sensed by a pressure measuring element into standard electrical signals.

In an actual application, the deformation information generated on the handle may be detected by a film pressure sensor. Here, the film pressure sensor is a film sensor device which is made of a flexible film material, allowed to fold and bend in a certain range and may be customized in shape.

In an example, types of flexible films may comprise a tantalum nitride piezoresistive film, a polysilicon nano film.

In an example, the pressure sensor may comprise at least one sensing unit, and the at least one sensing unit may be distributed at two opposite positions of the handle, for example, two opposite positions in an extending direction of the handle when the user holds the handle.

In the embodiment of the application, the deformation information generated on the handle may reflect magnitude and direction of the push or pull force applied to the handle by the user. Therefore, the information of the push or pull force applied to the handle by the user at the current moment may be accurately acquired according to the deformation information generated on the handle and detected by the pressure sensor, to improve control accuracy of assisting the cleaning device with power.

In an actual application, types of pressure sensors comprise, but are not limited to a piezoelectric pressure sensor, a piezoresistive pressure sensor, a piezomagnetic pressure sensor, a micro-electromechanical system chip, a biomaterial sensor.

In an implementation, the pressure sensor comprises a first sensing unit and a second sensing unit.

In the above device control method, with reference to FIG. 7, the operation of acquiring the information of the push or pull force applied to the handle by the user at the current moment according to the deformation information generated on the handle and detected by the pressure sensor may comprise the following operations A701 to A703.

At operation A701, deformation information of a first area on the handle is detected by the first sensing unit, and a first vector information of the push or pull force applied to the handle by the user is acquired according to the deformation information of the first area.

In an example, the deformation information detected by the first sensing unit becomes the first vector information of the push or pull force applied to the handle by the user, based on signal processing.

At operation A702, deformation information of a second area on the handle is detected by the second sensing unit, and a second vector information of the push or pull force applied to the handle by the user is acquired according to the deformation information of the second area.

In an example, the deformation information detected by the second sensing unit becomes the second vector information of the push or pull force applied to the handle by the user, based on signal processing.

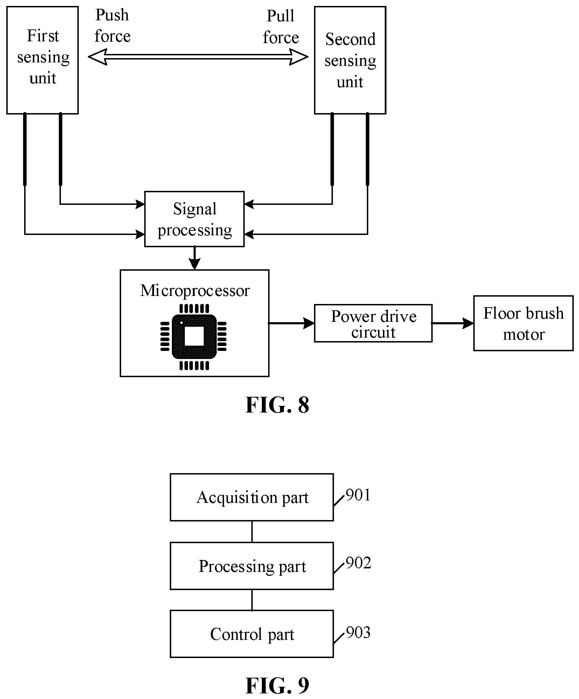

In an example, with reference to FIG. 8, the push force and the pull force applied to the handle by the user are sensed by the first sensing unit and the second sensing unit respectively. Here, the push force and the pull force correspond to a push force signal and a pull force signal acquired by the pressure sensor respectively.

In an example, after preliminary processing is performed on the push signal and the pull signal, for example, analog-to-digital conversion and signal amplification are performed on the push signal and the pull signal, the sensor strength signal is obtained, and the sensor strength signal is transmitted to a Microcontroller Unit (MCU).

At operation A703, the information of the push or pull force applied to the handle by the user at the current moment is acquired according to the first vector information and the second vector information.

Here, the first vector information and the second vector information correspond to the push signal and the pull signal respectively.

In an example, with reference to FIG. 8, the MCU performs algorithmic calculation according to the first vector information and the first vector information, to acquire the information of the push or pull force applied to the handle by the user at the current moment.

In an example, a difference between the push signal corresponding to the first vector information and the pull signal corresponding to the second vector information is calculated, and the sensor strength signal is determined according to the difference between the push signal and the pull signal.

In the embodiment of the application, the push force signal and the pull force signal applied to the handle by the user are acquired by the first sensing unit and the second sensing unit respectively, and the sensor strength signal is determined according to the difference between the push signal and the pull signal, which may reduce errors caused by information of the push or pull force acquired by a single sensor, thus magnitude of the push or pull force applied to the handle by the user may be accurately acquired, and control accuracy of assisting the cleaning device with power may be improved.

In an implementation, the operation of controlling the operation state of the cleaning device according to the torque compensation information may comprise the following operations.

Rotation speed and direction of the floor brush motor are determined according to the torque compensation information. The operation state of the cleaning device is controlled according to the rotation speed and direction of the motor.

In an example, with reference to FIG. 8, the torque compensation information is acquired, and an operation state of the floor brush motor is controlled by the power drive circuit according to the torque compensation information, to achieve strength compensation on the user's push or pull force.

It should be understood that when the rotation direction of the floor brush motor is matched with the speed direction of the cleaning device, the effective acting force along the speed direction of the cleaning device increases. Therefore, the user may be accurately assisted with power, and the user's resistance upon using the cleaning device may be effectively reduced.

In the embodiment of the application, the rotation speed and direction of the floor brush motor are determined according to the torque compensation information; the operation state of the cleaning device may be accurately controlled according to the rotation speed and direction of the floor brush motor, to improve control accuracy of assisting the cleaning device with power.

Based on the same technical concept as the foregoing embodiments, with reference to FIG. 9, a device control apparatus is provided in an embodiment of the application, the apparatus comprises an acquisition part 901, a processing part 902 and a control part 903.

The acquisition part 901 is configured to acquire information of a push or pull force applied to the handle by a user at a current moment, and determine a movement state of the cleaning device at the current moment according to the information of the push or pull force.

The processing part 902 is configured to determine torque compensation information of the floor brush motor at the current moment according to the movement state of the cleaning device at the current moment and the information of the push or pull force.

The control part 903 is configured to control an operation state of the cleaning device according to the torque compensation information.

In an actual application, the device control apparatus may be applied to a cleaning device. The cleaning device comprises a cleaning device body and a floor brush. The cleaning device body is provided with a handle thereon, and the floor brush is provided with a floor brush motor and a roller thereon.

In an implementation, the processing part 902 configured to determine the movement state of the cleaning device at the current moment according to the information of the push or pull force comprises that the processing part is configured to:
determine information of a resultant force along a speed direction of the cleaning device according to the information of the push or pull force and information of a rolling friction force of the cleaning device;
acquire speed information of the cleaning device at the current moment; and
determine the movement state of the cleaning device at the current moment according to the information of the resultant force and the speed information.

In an implementation, the processing part 902 configured to acquire the speed information of the cleaning device at the current moment comprises that the processing part is configured to:
acquire an intensity variation curve of the push or pull force applied to the handle by the user after the cleaning device is started; and
acquire the speed information of the cleaning device at the current moment according to the intensity variation curve of the push or pull force and the information of the rolling friction force of the cleaning device.

In an implementation, the handle is provided with a pressure sensor thereon, and the acquisition part 901 configured to acquire the information of the push or pull force applied to the handle by the user at the current moment comprises that the acquisition part is configured to:
acquire the information of the push or pull force applied to the handle by the user at the current moment according to deformation information generated on the handle and detected by the pressure sensor.

In an implementation, the pressure sensor comprises a first sensing unit and a second sensing unit.

The acquisition part 901 configured to acquire the information of the push or pull force applied to the handle by the user at the current moment according to the deformation information generated on the handle and detected by the pressure sensor comprises that the acquisition part is configured to:
detect deformation information of a first area on the handle by the first sensing unit, and acquire a first vector information of the push or pull force applied to the handle by the user according to the deformation information of the first area;
detect deformation information of a second area on the handle by the second sensing unit, and acquire a second vector information of the push or pull force applied to the handle by the user according to the deformation information of the second area; and
acquire the information of the push or pull force applied to the handle by the user at the current moment according to the first vector information and the second vector information.

In an implementation, the control part 903 configured to control the operation state of the cleaning device according to the torque compensation information comprises that the control part is configured to:
determine rotation speed and direction of the floor brush motor according to the torque compensation information; and
control the operation state of the cleaning device according to the rotation speed and direction of the floor brush motor.

In some embodiments, functions or modules comprised in the apparatus provided in the embodiment of the application may be used to execute methods described in the above method embodiments, and implementation thereof may refer to descriptions of the above method embodiments.

In an actual application, each of the acquisition module 901, the processing module 902 and the control module 903 may be implemented by a processor of an electronic device, and the processor may be at least one of an ASIC, a DSP, a DSPD, a PLD, a FPGA, a CPU, a controller, a microcontroller or a microprocessor, which is not limited in the embodiments of the application.

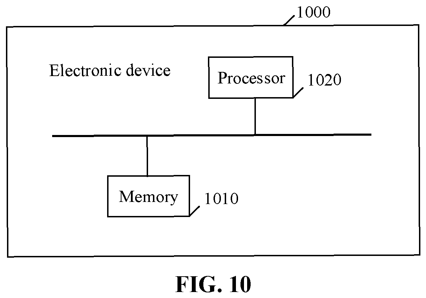

Based on the same technical concept as the foregoing embodiments, with reference to FIG. 10, an electronic device 1000 is provided in an embodiment of the application, the electronic device may comprise a memory 1010 and a processor 1020.

The memory 1010 is configured to store a computer program and data.

The processor 1020 is configured to execute the computer program stored in the memory, to implement any one of the device control methods in the foregoing embodiments.

In an actual application, the memory 1010 may be a volatile memory, such as a Random Access Memory (RAM); or may be a non-volatile memory, such as a Read-Only Memory (ROM), a flash memory, a Hard Disk Drive (HDD) or a Solid-State Drive (SSD); or may be a combination of the above types of memories. The memory 1010 may provide instructions and data to the processor 1020.

Based on the same technical concept as the foregoing embodiments, an embodiment of the application provides a cleaning device, the cleaning device comprises any one of the above device control apparatuses or any one of the above electronic devices.

Based on the same technical concept as the foregoing embodiments, an embodiment of the application provides a readable storage medium, to store computer programs corresponding to the above device control methods, the computer program may be executed by a processor of an electronic device to complete operations of the foregoing methods.

In an actual application, the readable storage medium comprises, but is not limited to a Phase-Change Memory (PCM), a Programmable Random Access Memory (PRAM), a Static Random Access Memory (SRAM), a Dynamic Random Access Memory (DRAM), a RAM, a ROM, a Programmable Read-Only Memory (EPROM).

An embodiment of the application provides a computer program product, the computer product carries program codes, and instructions comprised in the program codes may be used to implement operations in any one of the above embodiments of the device control methods. The computer program product may be specifically implemented by hardware, software or a combination thereof. In some embodiments, the computer program product is embodied as a computer storage medium, and in some embodiments, the computer program product is embodied as a software product, such as a Software Development Kit (SDK), etc.

The above descriptions of various embodiments tend to emphasize differences among various embodiments, and the same or similar aspects may refer to each other.

Methods disclosed in various method embodiments provided in the application may be arbitrarily combined without conflict, to obtain a new method embodiment.

Features disclosed in various product embodiments provided in the application may be arbitrarily combined without conflict, to obtain a new product embodiment.

Features disclosed in various method or device embodiments provided in the application may be arbitrarily combined without conflict, to obtain a new method or device embodiment.

In several embodiments provided in the application, it should be understood that the disclosed devices and methods may be implemented in other ways. The above device embodiments are only illustrative. Exemplarily, division of the units is only a logical function division. In an actual implementation, there may be other division manners. For example, multiple units or components may be combined or may be integrated into another system, or some features may be ignored or may not be executed. Furthermore, mutual coupling or direct coupling or communication connection among components as shown or discussed may be indirect coupling or communication connection through some interfaces, devices or units, and may be in electrical, mechanical or other forms.

The above units described as separate components may be or may not be physically separated, and the components displayed as units may be or may not be physical units, that is, they may be located in one place, or may be distributed on multiple network units. Part or all of the units may be selected according to actual requirements, to achieve the purpose of the solutions of the embodiments.

Furthermore, functional units in each embodiment of the application may be all integrated into one processing module, or each unit may be separately used as a unit respectively, or two or more units may be integrated into one unit. The above integrated unit may be implemented in form of hardware or in form of hardware plus software functional units.

It may be understood by those of ordinary skill in the art that all or part of operations implementing the above method embodiments may be completed by hardware related to program instructions, and the foregoing program may be stored in a computer-readable storage medium. When the program is executed, operations comprising the above method embodiments are performed.

The above descriptions are only specific implementations of the application, however, the scope of protection of the application is not limited thereto. Variations or substitutions easily conceived by any technician familiar with this technical field within the technical scope disclosed in the application, should fall within the scope of protection of the application. Therefore, the scope of protection of the application shall be subjected to the scope of protection of the claims.

### INDUSTRIAL APPLICABILITY

The embodiments of the application disclose a device control method and apparatus, an electronic device, a cleaning device, a storage medium, and a computer program, which are applied to a cleaning device. The cleaning device comprises a cleaning device body and a floor brush. The cleaning device body is provided with a handle thereon, and the floor brush is provided with a floor brush motor and a roller thereon. The device control method comprises the following operations. Information of a push or pull force applied to the handle by a user at a current moment is acquired, and a movement state of the cleaning device at the current moment is determined according to the information of the push or pull force. Torque compensation information of the floor brush motor at the current moment is determined according to the movement state of the cleaning device at the current moment and the information of the push or pull force. An operation state of the cleaning device is controlled according to the torque compensation information. Based on the device control method provided in the embodiments of the application, control accuracy of assisting the cleaning device with power may be improved.

## Claims

1. A device control method for a cleaning device, wherein the cleaning device comprising a cleaning device body provided with a handle (101,105) and a floor brush provided with a floor brush motor (102) and a roller (103), the method comprising:
(SA201) acquiring an information of a push or pull force applied to the handle (101,105) by a user at a current moment, and determining a movement state of the cleaning device at a current moment according to the information of the push or pull force;
the method further **characterized by** the following steps:
(SA202) determining a torque compensation information of the floor brush motor (102) at the current moment according to the movement state of the cleaning device at the current moment and the information of the push or pull force; and
(SA203) controlling an operation state of the cleaning device according to the torque compensation information.

2. The method of claim 1, wherein determining the movement state of the cleaning device at the current moment according to the information of the push or pull force comprises:
(SA301) determining an information of a resultant force along a speed direction of the cleaning device according to the information of the push or pull force and an information of a rolling friction force of the cleaning device;
(SA302) acquiring a speed information of the cleaning device at the current moment; and
(SA303) determining the movement state of the cleaning device at the current moment according to the information of the resultant force and the speed information.

3. The method of claim 2, wherein acquiring the speed information of the cleaning device at the current moment comprises:
(SA601) acquiring an intensity variation curve of the push or pull force applied to the handle (101,105) by the user after the cleaning device is started; and
(SA602) acquiring the speed information of the cleaning device at the current moment according to the intensity variation curve of the push or pull force and the information of the rolling friction force of the cleaning device.

4. The method of claim 1, wherein the handle (101,105) is provided with a pressure sensor, and acquiring the information of the push or pull force applied to the handle (101,105) by the user at the current moment comprises:
acquiring the information of the push or pull force applied to the handle (101,105) by the user at the current moment according to a deformation information generated on the handle (101,105) and detected by the pressure sensor.

5. The method of claim 4, wherein the pressure sensor comprises a first sensing unit and a second sensing unit,
acquiring the information of the push or pull force applied to the handle (101,105) by the user at the current moment according to the deformation information generated on the handle (101,105) and detected by the pressure sensor comprises:
(SA701) detecting a deformation information of a first area on the handle (101,105) by the first sensing unit, and acquiring a first vector information of the push or pull force applied to the handle (101,105) by the user according to the deformation information of the first area;
(SA702) detecting a deformation information of a second area on the handle (101,105) by the second sensing unit, and acquiring a second vector information of the push or pull force applied to the handle (101,105) by the user according to the deformation information of the second area; and
(SA703) acquiring the information of the push or pull force applied to the handle (101,105) by the user at the current moment according to the first vector information and the second vector information.

6. The method of claim 1, wherein controlling the operation state of the cleaning device according to the torque compensation information comprises:
determining a rotation speed and direction of the floor brush motor (102) according to the torque compensation information; and
controlling the operation state of the cleaning device according to the rotation speed and direction of the floor brush motor (102).

7. A device control apparatus, applied to a cleaning device, the cleaning device comprising a cleaning device body provided with a handle (101,105) and a floor brush provided with a floor brush motor (102) and a roller (103), the apparatus comprising:
an acquisition part (901), configured to acquire an information of a push or pull force applied to the handle (101,105) by a user at a current moment, and determine a movement state of the cleaning device at the current moment according to the information of the push or pull force;
a processing part (902), configured to determine a torque compensation information of the floor brush motor (102) at the current moment according to the movement state of the cleaning device at the current moment and the information of the push or pull force; and
a control part (903), configured to control an operation state of the cleaning device according to the torque compensation information.

8. An electronic device (1000), comprising a memory (1010), a processor (1020), and a computer program stored on the memory (1010) and executable on the processor (1020), the processor (1020) implementing a device control method of any one of claims 1 to 6 when the processor (1020) executes the program.

9. A cleaning device, comprising a device control apparatus of claim 7 or the electronic device (1000) of claim 8.

10. A computer storage medium, having stored thereon a computer program, the computer program capable of implementing a device control method of any one of claims 1 to 6 after the computer program is executed.

11. A computer program, comprising computer-readable codes, a processor (1020) in an electronic device (1000) operating to execute a device control method of any one of claims 1 to 6 when the computer-readable codes are executed in the electronic device (1000).

## Patentansprüche

1. Vorrichtungssteuerungsverfahren für eine Reinigungsvorrichtung, wobei die Reinigungsvorrichtung einen Reinigungsvorrichtungskörper umfasst, der mit einem Griff (101, 105) und einer Bodenbürste versehen ist, die mit einem Bodenbürstenmotor (102) und einer Rolle (103) versehen ist, wobei das Verfahren Folgendes umfasst:
(SA201) Erfassen einer Information über eine von einem Benutzer auf den Griff (101, 105) ausgeübte Druck- oder Zugkraft zu einem aktuellen Zeitpunkt und Bestimmen eines Bewegungszustands der Reinigungsvorrichtung zu einem aktuellen Zeitpunkt gemäß der Information über die Druck- oder Zugkraft;
wobei das Verfahren ferner durch die folgenden Schritte gekennzeichnet ist:
(SA202) Bestimmen einer Drehmomentkompensationsinformation des Bodenbürstenmotors (102) zu dem aktuellen Zeitpunkt gemäß dem Bewegungszustand der Reinigungsvorrichtung zu dem aktuellen Zeitpunkt und der Information der Druck- oder Zugkraft; und
(SA203) Steuern eines Betriebszustands der Reinigungsvorrichtung gemäß der Drehmomentkompensationsinformation.

2. Verfahren gemäß Anspruch 1, wobei das Bestimmen des Bewegungszustands der Reinigungsvorrichtung zum aktuellen Zeitpunkt gemäß der Information über die Druck- oder Zugkraft Folgendes umfasst:
(SA301) Bestimmen einer Information über eine resultierende Kraft entlang einer Geschwindigkeitsrichtung der Reinigungsvorrichtung gemäß der Information über die Druck- oder Zugkraft und einer Information über eine Rollreibungskraft der Reinigungsvorrichtung;
(SA302) Erfassen einer Geschwindigkeitsinformation der Reinigungsvorrichtung zu dem aktuellen Zeitpunkt; und
(SA303) Bestimmen des Bewegungszustandes der Reinigungsvorrichtung zum aktuellen Zeitpunkt gemäß der Information der resultierenden Kraft und der Geschwindigkeitsinformation.

3. Verfahren gemäß Anspruch 2, wobei das Erfassen der Geschwindigkeitsinformation der Reinigungsvorrichtung zum aktuellen Zeitpunkt Folgendes umfasst:
(SA601) Erfassen einer Intensitätsveränderungskurve der vom Benutzer auf den Griff (101, 105) ausgeübten Druck- oder Zugkraft, nachdem die Reinigungsvorrichtung gestartet wurde; und
(SA602) Erfassen der Geschwindigkeitsinformation der Reinigungsvorrichtung zum aktuellen Zeitpunkt gemäß der Intensitätsveränderungskurve der Druck- oder Zugkraft und der Information über die Rollreibungskraft der Reinigungsvorrichtung.

4. Verfahren gemäß Anspruch 1, wobei der Griff (101, 105) mit einem Drucksensor versehen ist und das Erfassen der Information über die vom Benutzer auf den Griff (101, 105) ausgeübte Druck- oder Zugkraft zum aktuellen Zeitpunkt Folgendes umfasst
Erfassen der Information über die vom Benutzer auf den Griff (101, 105) ausgeübte Druck- oder Zugkraft zum aktuellen Zeitpunkt gemäß einer Verformungsinformation, die an dem Griff (101, 105) erzeugt und von dem Drucksensor erfasst wird.

5. Verfahren gemäß Anspruch 4, wobei der Drucksensor eine erste Erfassungseinheit und eine zweite Erfassungseinheit umfasst,
das Erfassen der Information über die vom Benutzer auf den Griff (101, 105) ausgeübte Druck- oder Zugkraft zum aktuellen Zeitpunkt gemäß der am Griff (101, 105) erzeugten und vom Drucksensor erfassten Verformungsinformation Folgendes umfasst:
(SA701) Erkennen einer Verformungsinformation eines ersten Bereichs auf dem Griff (101, 105) durch die erste Erfassungseinheit, und Erfassen einer ersten Vektorinformation der durch den Benutzer auf den Griff (101, 105) ausgeübten Druck- oder Zugkraft gemäß der Verformungsinformation des ersten Bereichs;
(SA702) Erkennen einer Deformationsinformation eines zweiten Bereichs auf dem Griff (101, 105) durch die zweite Erfassungseinheit und Erfassen einer zweiten Vektorinformation der durch den Benutzer auf den Griff (101, 105) ausgeübten Druck- oder Zugkraft gemäß der Deformationsinformation des zweiten Bereichs; und
(SA703) Erfassen der Information über die vom Benutzer auf den Griff (101, 105) ausgeübte Druck- oder Zugkraft zum aktuellen Zeitpunkt gemäß der ersten Vektorinformation und der zweiten Vektorinformation.

6. Verfahren gemäß Anspruch 1, wobei das Steuern des Betriebszustands der Reinigungsvorrichtung gemäß der Drehmomentkompensationsinformation Folgendes umfasst:
Bestimmen einer Rotationsgeschwindigkeit und -richtung des Bodenbürstenmotors (102) gemäß der Drehmomentkompensationsinformation; und
Steuern des Betriebszustands der Reinigungsvorrichtung gemäß der Drehgeschwindigkeit und -richtung des Bodenbürstenmotors (102).

7. Vorrichtungssteuerungsgerät, das auf eine Reinigungsvorrichtung angewendet wird, wobei die Reinigungsvorrichtung einen Reinigungsvorrichtungskörper umfasst, der mit einem Griff (101, 105) und einer Bodenbürste versehen ist, die mit einem Bodenbürstenmotor (102) und einer Rolle (103) versehen ist, wobei das Gerät Folgendes umfasst:
einen Erfassungsteil (901), der so konfiguriert ist, dass er eine Information über eine von einem Benutzer auf den Griff (101, 105) ausgeübte Druck- oder Zugkraft zu einem aktuellen Zeitpunkt erfasst und einen Bewegungszustand der Reinigungsvorrichtung zum aktuellen Zeitpunkt gemäß der Information über die Druck- oder Zugkraft bestimmt;
einen Verarbeitungsteil (902), der so konfiguriert ist, dass er eine Drehmomentkompensationsinformation des Bodenbürstenmotors (102) zum aktuellen Zeitpunkt gemäß dem Bewegungszustand der Reinigungsvorrichtung zum aktuellen Zeitpunkt und der Information der Druck- oder Zugkraft bestimmt; und
einen Steuerteil (903), der so konfiguriert ist, dass er einen Betriebszustand der Reinigungsvorrichtung gemäß der Drehmomentkompensationsinformation steuert.

8. Elektronische Vorrichtung (1000) umfassend einen Speicher (1010), einen Prozessor (1020) und ein Computerprogramm, das in dem Speicher (1010) gespeichert ist und von dem Prozessor (1020) ausgeführt werden kann, wobei der Prozessor (1020) ein Vorrichtungssteuerverfahren gemäß einem der Ansprüche 1 bis 6 implementiert, wenn der Prozessor (1020) das Programm ausführt.

9. Reinigungsvorrichtung, umfassend ein Vorrichtungssteuerungsgerät gemäß Anspruch 7 oder die elektronische Vorrichtung (1000) gemäß Anspruch 8.

10. Computerspeichermedium, aufweisend ein darauf gespeichertes Computerprogramm, wobei das Computerprogramm in der Lage ist, ein Vorrichtungssteuerverfahren gemäß einem der Ansprüche 1 bis 6 zu implementieren, nachdem das Computerprogramm ausgeführt worden ist.

11. Computerprogramm umfassend computerlesbare Codes, wobei ein Prozessor (1020) in einer elektronischen Vorrichtung (1000) betrieben wird, um ein Vorrichtungssteuerverfahren gemäß einem der Ansprüche 1 bis 6 auszuführen, wenn die computerlesbaren Codes in der elektronischen Vorrichtung (1000) ausgeführt werden.

## Revendications

1. Procédé de commande d'un dispositif pour un dispositif de nettoyage, dans lequel le dispositif de nettoyage comprend un corps de dispositif de nettoyage muni d'une poignée (101, 105) et d'une brosse de sol munie d'un moteur de brosse de sol (102) et d'un rouleau (103), le procédé comprenant :
(SA201) acquérir une information relative à une force de poussée ou de traction appliquée à la poignée (101, 105) par un utilisateur à un instant donné, et déterminer un état de mouvement du dispositif de nettoyage à un instant donné en fonction de l'information relative à la force de poussée ou de traction ;
le procédé étant en outre **caractérisé par** les étapes suivantes :
(SA202) déterminer des informations de compensation de couple du moteur de brosse de sol (102) à l'instant présent en fonction de l'état de mouvement du dispositif de nettoyage à l'instant présent et des informations relatives à la force de poussée ou de traction ; et
(SA203) contrôler un état de fonctionnement du dispositif de nettoyage en fonction des informations de compensation de couple.

2. Procédé selon la revendication 1, dans lequel la détermination de l'état de déplacement du dispositif de nettoyage à l'instant présent en fonction des informations relatives à la force de poussée ou de traction comprend :
(SA301) déterminer une information d'une force résultante dans le sens de la vitesse du dispositif de nettoyage en fonction de l'information de la force de poussée ou de traction et d'une information d'une force de frottement de roulement du dispositif de nettoyage ;
(SA302) acquérir une information de vitesse du dispositif de nettoyage à l'instant présent ; et
(SA303) déterminer l'état de déplacement du dispositif de nettoyage à l'instant présent en fonction des informations relatives à la force résultante et des informations relatives à la vitesse.

3. Procédé selon la revendication 2, dans lequel l'acquisition de l'information de vitesse du dispositif de nettoyage à l'instant présent comprend :
(SA601) acquérir une courbe de variation d'intensité de la force de poussée ou de traction appliquée à la poignée (101, 105) par l'utilisateur après le démarrage du dispositif de nettoyage ; et
(SA602) acquérir les informations de vitesse du dispositif de nettoyage à l'instant présent en fonction de la courbe de variation d'intensité de la force de poussée ou de traction et des informations relatives à la force de frottement de roulement du dispositif de nettoyage.

4. Procédé selon la revendication 1, dans lequel la poignée (101, 105) est équipée d'un capteur de pression, et l'acquisition des informations relatives à la force de poussée ou de traction appliquée à la poignée (101, 105) par l'utilisateur à l'instant présent comprend :
l'acquisition des informations relatives à la force de poussée ou de traction appliquée à la poignée (101, 105) par l'utilisateur à l'instant présent en fonction des informations de déformation générées sur la poignée (101, 105) et détectées par le capteur de pression.

5. Procédé selon la revendication 4, dans lequel le capteur de pression comprend une première unité de détection et une deuxième unité de détection,
l'acquisition des informations relatives à la force de poussée ou de traction exercée sur la poignée (101, 105) par l'utilisateur à l'instant présent en fonction des informations de déformation générées sur la poignée (101, 105) et détectées par le capteur de pression comprend :
(SA701) la détection d'informations de déformation d'une première zone sur la poignée (101, 105) par la première unité de détection, et l'acquisition d'une première information vectorielle de la force de poussée ou de traction appliquée à la poignée (101, 105) par l'utilisateur en fonction des informations de déformation de la première zone ;
(SA702) détecter une information de déformation d'une deuxième zone sur la poignée (101, 105) par la deuxième unité de détection, et acquérir une deuxième information vectorielle de la force de poussée ou de traction appliquée à la poignée (101, 105) par l'utilisateur en fonction de l'information de déformation de la deuxième zone ; et
(SA703) acquérir les informations de la force de poussée ou de traction appliquée à la poignée (101, 105) par l'utilisateur à l'instant présent en fonction des premières informations vectorielles et des deuxièmes informations vectorielles.

6. Procédé selon la revendication 1, dans lequel le contrôle de l'état de fonctionnement du dispositif de nettoyage en fonction des informations de compensation de couple comprend :
déterminer une vitesse de rotation et une direction de rotation du moteur de la brosse de sol (102) en fonction des informations de compensation de couple ; et
contrôler l'état de fonctionnement du dispositif de nettoyage en fonction de la vitesse de rotation et de la direction du moteur de la brosse de sol (102).

7. Appareil de commande de dispositif, appliqué à un dispositif de nettoyage, le dispositif de nettoyage comprenant un corps de dispositif de nettoyage muni d'une poignée (101, 105) et d'une brosse de sol munie d'un moteur de brosse de sol (102) et d'un rouleau (103), l'appareil comprenant :
une partie d'acquisition (901), configurée pour acquérir une information relative à une force de poussée ou de traction appliquée à la poignée (101, 105) par un utilisateur à un instant donné, et pour déterminer un état de mouvement du dispositif de nettoyage à l'instant donné en fonction de l'information relative à la force de poussée ou de traction ;
une partie de traitement (902), configurée pour déterminer une information de compensation de couple du moteur de brosse de sol (102) à l'instant présent en fonction de l'état de mouvement du dispositif de nettoyage à l'instant présent et de l'information relative à la force de poussée ou de traction ; et
une partie de commande (903), configurée pour commander un état de fonctionnement du dispositif de nettoyage en fonction des informations de compensation de couple.

8. Dispositif électronique (1000) comprenant une mémoire (1010), un processeur (1020) et un programme informatique stocké sur la mémoire (1010) et exécutable sur le processeur (1020), le processeur (1020) mettant en œuvre un procédé de commande de dispositif selon l'une quelconque des revendications 1 à 6 lorsque le processeur (1020) exécute le programme.

9. Dispositif de nettoyage, comprenant un appareil de commande de dispositif selon la revendication 7 ou le dispositif électronique (1000) selon la revendication 8.

10. Support de stockage informatique, sur lequel est stocké un programme informatique, le programme informatique étant capable de mettre en œuvre un procédé de commande de dispositif selon l'une quelconque des revendications 1 à 6 après l'exécution du programme informatique.

11. Programme informatique, comprenant des codes lisibles par ordinateur, un processeur (1020) dans un dispositif électronique (1000) fonctionnant pour exécuter un procédé de commande de dispositif selon l'une quelconque des revendications 1 à 6 lorsque les codes lisibles par ordinateur sont exécutés dans le dispositif électronique (1000).
